# EUROPÄISCHE PATENTSCHRIFT

(11) **EP 1 015 843 B1**
(45) Veröffentlichungstag und Bekanntmachung des Hinweises auf die Patenterteilung: **11.06.2003**
(21) Anmeldenummer: 98952568.8
(22) Anmeldetag: 10.09.1998
(51) Int. Cl.: G01B 7/34, G12B 21/08

(54) **HEBELARM FÜR EIN RASTERKRAFTMIKROSKOP**
LEVER ARM FOR A SCANNING MICROSCOPE
BRAS DE LEVIER DESTINE A UN MICROSCOPE A BALAYAGE

(30) Priorität: 16.09.1997 DE 19740763
(43) Veröffentlichungstag der Anmeldung: 05.07.2000
(73) Patentinhaber: Forschungszentrum Jülich GmbH, 52425 Jülich (DE)
(72) Erfinder: JUMPERTZ, Reiner, Sunnyvale, CA 94086 (US)
(86) Internationale Anmeldenummer: DE9802706
(87) Internationale Veröffentlichungsnummer: WO99014555

(56) Entgegenhaltungen:
- EP-A- 0 794 406
- WO-A-92/12398
- US-A- 5 354 985
- US-A- 5 444 244
- US-A- 5 618 760
- US-A- 5 666 190
- INGOLF RUGE: "Halbleiter Technologie, zweite Auflage, Seite 165", 1984, SPRINGER, BERLIN (DE)

## Beschreibung

Die Erfindung betrifft ein Verfahren zur Herstellung eines Hebelarms mit einer Spitze für ein Rasterkraftmikroskop.

Aus den Druckschriften EP 0 619 872 B1 sowie DE 44 37 306 C2 sind Hebelarme für Rasterkraftmikroskope bekannt, die einen im Hebelarm integrierten piezoresistiven Widerstand aufweisen. Auslenkungen des Hebelarms verändern den Widerstand. Die Widerstandsänderung ist Maß für die Auslenkung. Der piezoresistive Widerstand ist dabei gemäß DE 44 37 306 C2 Teil eines MOSFETs.

Zur Herstellung eines solchen Hebelarms kann die C-MOS-Technik eingesetzt werden, mitteis der u. a. Widerstände in Chips wie folgt implantiert werden können.

Auf einen, aus einkristallinem Silizium bestehenden Wafer mit einer dünnen Oxidschicht auf seiner Oberfläche wird ein Fotolack aufgetragen. Der Fotolack wird mittels einer Maske definiert partiell belichtet, entwikkelt und so partiell entfernt. Es entsteht in der Lackschicht ein Fenster. Die Position und Ausdehnung (Größe) des Fensters korrespondiert mit der Position und Ausdehnung des zu implantierenden piezoresistiven Widerstandes im Wafer. Anschließend wird die Lackschicht mit dem Fenster mit geeigneten Ionen, so zum Beispiel mit Bor-, Arsen- oder Phosphorionen beschossen. Auf diese Weise werden Ionen im Wafer durch das Fenster hindurch räumlich begrenzt implantiert. Der Fotolack wird dann mit Lösungsmitteln, wie z.B. Azeton, vollständig entfernt.

Um den implantierten Widerstand mit elektrischen Kontakten zu versehen, wird zunächst eine neue Fotolackschicht aufgetragen. Fenster werden in der Fotolackschicht an den Stellen erzeugt, an denen der Widerstand mit elektrischen Leitern verbunden werden soll. Es werden durch die Fenster hindurch wiederum z. B. Borionen implantiert. Die Dosis ist nun erheblich höher als die Dosis bei der ersten Ionenimplantation. Die hohe Dosis ist erforderlich, um einen ohmschen Kontakt zum implantierten Widerstand herstellen zu können. Andernfalls könnte unerwünscht eine Halbleiterdiode entstehen. Der Lack wird erneut vollständig entfernt. Eine Temperaturbehandlung bei Temperaturen von ca. 1050°C wird vorgenommen. Das durch den Ionenbeschuß geschädigte Kristallgitter wird so ausgeheilt. Der unterhalb der Oxidschicht implantierte Widerstand weist nach der Ausheilung die gewünschten piezoresistiven Eigenschaften auf.

Erneut wird eine Lackschicht aufgetragen. Fenster werden im Lack an den vorgesehenen Kontaktstellen erzeugt. Die Oxidschicht wird im Bereich der Fenster durch chemisches Ätzen mittels Flußsäure entfernt. Der Fotolack wird dann mit Lösungsmitteln, wie z.B. Azeton, vollständig entfernt. Eine Metallschicht wird großflächig aufgetragen. Ein Fotolack wird auf der Metallschicht aufgebracht. Ein Fenster wird im Lack erzeugt. Die Position und Ausdehnung des Fensters ist dabei so gewählt, daß die Metallschicht durch das Fenster hindurch in zwei elektrisch nicht miteinander verbundene Bereiche getrennt werden kann. Die Kontaktstellen sind nach einer Trennung in zwei Bereiche nicht über die Metallschicht elektrisch leitend miteinander verbunden. Durch Ionenstrahlätzen wird das Metall im Bereich des Fensters entfernt und so die Isolierung in zwei Bereiche vorgenommen. Der Fotolack wird dann mit Lösungsmitteln, wie z.B. Azeton, vollständig entfernt.

Der gewünschte piezoresistive Widerstand liegt nun im Wafer vor. Eine Spannung kann über die metallischen Bereiche (Leiterbahnen) am implantierten Widerstand angelegt werden.

Anschließend muß der Wafer (z. B. durch Ätzen) so bearbeitet werden, daß er eine für einen Hebelarm eines Rasterkraftmikroskopes geeignete Form und Größe aufweist. Zum Schluß wird die Spitze mit der Hand aufgeklebt.

Das vorbeschriebene Verfahren zur Herstellung eines piezoresistiven Widerstandes in einem Wafer ist preiswert. Das manuelle Aufkleben der Spitze verteuert allerdings den Prozeß wesentlich.

Es ist nicht möglich, mit dem geschilderten Verfahren in einem hebelarmartigen Wafer mit einer bereits vorliegenden Spitze einen piezoresistiven Widerstand zu implantieren.

Durch das Verfahren würde nämlich sowohl die Spitze als auch der zerbrechliche Hebelarm zerstört werden. Es ist nämlich z. B. nicht möglich, die Spitze mit Hilfe eines Fotolacks zu schützen, da die Lackschicht an der Spitze abreißt. Nachfolgendes Ionenstrahlätzen würde die Spitze daher stark beschädigen.

Auch wird die Spitze durch die Oxidationen bei Temperaturen von 1000°C und mehr beschädigt. Auftretende thermische Spannungen können ferner den zerbrechlichen Wafer zerstören.

Technisch bedingt weist ein aus einem konventionellen Wafer herausgeätzter Hebelarm eine relativ unebene Oberfläche auf. Fotolackschichten können nicht mit gleichmäßiger Dicke auf eine unebene Oberfläche aufgebracht werden. Unvermeidbar sind dann so dünne Stellen im Fotolack, daß dieser an seinen dünnen Stellen den Anforderungen nicht mehr gewachsen ist. So können sehr dünne Stellen durch nachfolgenden Ionenbeschuß so stark geschädigt werden, daß der Lack nicht mehr durch Belichtung und Entwicklung oder durch ein Lösungsmittel entfernt werden kann.

Aufgabe der Erfindung ist die Schaffung eines vergleichsweise preiswerten Herstellungsverfahrens für einen Hebelarm der vorgenannten Art.

Die Aufgabe wird durch ein Verfahren mit den Merkmalen des Anspruchs 1 gelöst. Einer vorteilhafte Ausgestaltung ergibt sich aus Anspruch 2.

In einem eine Spitze aufweisenden, Wafer wird ein piezoresistiver Widerstand mittels C-MOS implantiert. Der Wafer kann bereits zu Beginn des Verfahrens in Form eines zerbrechlichen Hebelarms vorliegen. Es ist jedoch auch möglich, dem Wafer diese Form z. B. mittels eines abschließenden Ätzschritts zu verleihen.

Unter C-MOS wird jedes Verfahren verstanden, das folgende Verfahrensschritte mehrfach umfaßt: Ein Fotolack wird als Schicht auf einer Oberfläche eines Gegenstandes aufgetragen. Im Fotolack wird zumindest ein Fenster erzeugt. Begrenzt auf die durch Fenster vorgegebene Bereiche werden danach Ionen im Gegenstand implantiert, oder Material wird vom Gegenstand abgetragen oder auf dem Gegenstand aufgebracht. Der Fotolack wird anschließend vollständig entfernt.

Anspruchsgemäß wird eine die Spitze bedeckende metallische Schicht auf den Wafer aufgebracht, wenn die Spitze im nachfolgenden Schritt z. B. vor einem Ionenstrahlätzen geschützt werden muß oder ein aufzubringender Fotolack aufgrund von technisch bedingten, unvermeidbar dünnen Stellen durch einen nachfolgenden Beschuß mit Ionen durchgehend beschädigt werden kann.

Schäden an der Spitze oder am Wafer werden so vermieden, da das Metall durch Ionenbeschuß kaum geschädigt werden kann und an der Spitze im Unterschied zu einem Fotolack nicht abreißt. Durchgehend beschädigter Fotolack kann zusammen der metallischen Schicht entfernt werden. So verbleiben keine Schäden aufgrund eines durchgehend geschädigten Fotolacks.

In der Metallschicht können und werden regelmäßig Fenster erzeugt, um eine nächste Auf- oder Abtragung oder eine Dotierung auf den Bereich zu beschränken, der durch die Fenster vorgegeben ist.

Das Metall ist so gewählt, daß es naßchemisch weggeätzt werden kann. So ist es möglich, die Metallschicht mit einem möglicherweise auf der Metallschicht befindlichen, geschädigten Fotolack selektiv vollständig und einfach wieder zu entfernen, ohne dabei den Wafer oder die Spitze zu beschädigen.

Unter naßchemischem Ätzen ist das Ätzen in Flüssigkeiten, wie z.B. Säuren oder Laugen, zu verstehen. Hiervon zu unterscheiden ist z. B. das Ionenstrahlätzen, bei dem physikalisch Material entfernt wird. Ionenstrahlätzen ist vergleichbar mit einem Bombardieren.

Liegt der Wafer bereits zu Beginn des Verfahrens als zerbrechlicher Hebelarm vor, so sind thermische Spannungen besonders zu vermeiden. Insbesondere bei Vorliegen eines Wafers in Form eines zerbrechlichen Hebelarms sind zerstörerisch wirkende Behandlungstemperaturen (oberhalb von 1000 °C) zu vermeiden.

Beispielsweise wird durch Ätzen aus einem konventionellen Wafer ein Gegenstand hergestellt, der die Form eines Hebelarms mit einer Spitze für ein Rasterkraftmikroskop aufweist.

Der hebelarmförmige Wafer kann zu Beginn des anspruchsgemäßen Verfahrens eine Oxidschicht auf seiner Oberfläche aufweisen.

Der Wafer besteht zum Beispiel aus einkristallinem Silizium oder aus III-V-Halbleitern. Spitze und Wafer bestehen aus einem Teil. Sie sind also einstückig.

In einem ersten Verfahrensschritt wird z. B. die zu bearbeitende Oberfläche mit einem Fotolack bedeckt. Der Fotolack reißt an der Spitze ab. Die Spitze ist ungeschützt.

Ein Fenster wird in der Lackschicht dort erzeugt, wo der Widerstand im Wafer implantiert werden soll.

Ionen werden nun durch das Fenster hindurch im Wafer implantiert, so z. B. Borionen. Die Dosis kann 9 x 10¹² Ionen pro Quadratzentimeter betragen. Die ungeschützte Spitze wird durch die Implantation von Borionen mit vergleichsweise niedriger Dosis nicht in einer Weise geschädigt, die sie für eine spätere Anwendung in einem Rasterkraftmikroskop unbrauchbar machen würde. Ein Sputterprozeß tritt hier also nicht auf. Die Dosis ist hier ferner so gering, daß der Lack an seinen dünnen Stellen nicht durchgehend geschädigt wird. Es bedarf daher nicht zwingend einer schützenden metallischen Schicht zwischen Wafer und Lack im Sinne des Hauptanspruchs.

Anschließend wird der Fotolack entfernt. Soweit eine durch die Ionenimplantation geschädigte Oxidschicht vorliegt, kann diese nun naßchemisch mit Flußsäure entfernt werden. Die Ätzung mit Flußsäure ist relativ selektiv gegenüber Silizium. Silizium wird also vergleichsweise gering durch Flußsäure angegriffen. Es ist hier möglich, den Ätzprozeß so genau zu kontrollieren und zu steuern, daß keine Schädigungen an der Spitze auftreten.

Es wird nun eine (neue) Oxidschicht auf der Oberfläche des Wafers z. B. wie folgt erzeugt. Der Wafer wird in einer Sauerstoffatmosphäre genügend lange relativ niedrigen Temperaturen von z. B. 900°C ausgesetzt. Temperaturen nahe 900 °C und geringer belasten den Wafer mit der Spitze nicht in zerstörerischer Weise.

Die so entstandene (neue) Oxidschicht gewährleistet eine gute elektrische Isolation des unterhalb der Oxidschicht implantierten Widerstandes und ermöglicht so z. B. die Ausgestaltung als MOSFET in der aus DE 44 37 306 C1 bekannten Weise. Der piezoresistive Widerstand ist dann Teil des MOSFETs.

Im nächsten Verfahrensschritt wird die Oberfläche des Wafers mit einem Metall beschichtet, das naßchemisch abgeätzt werden kann. Insbesondere ist Chrom geeignet. Geeignete Metalle sind ferner z. B. Wolfram, Gold sowie Aluminium. Die Metallschicht reißt im Unterschied zu einer Fotolack-Schicht an der Spitze nicht ab. Die Spitze wird daher vollständig durch die Metallschicht bedeckt und geschützt.

Die Metallschicht ist vorzugsweise zumindest 200 nm dick, damit die gewünschten schützenden Wirkungen zuverlässig eintreten.

Ein Fotolack wird auf die Metallschicht schichtförmig aufgetragen. An den Stellen, an denen der elektrische Kontakt zum implantierten Widerstand hergestellt werden soll, werden Fenster erzeugt. Im Bereich der Fenster sowie im Bereich der nicht durch den Fotolack geschützten Spitze wird das Metall weggeätzt.

Besteht die Metallschicht aus Chrom, so kann das Metall durch Chromätze entfernt werden.

Die Fenster im Fotolack setzen sich nun durch die Metallschicht hindurch fort.

Der Fotolack wird anschließend entfernt.

Ionen und zwar insbesondere Borionen werden durch die Fenster hindurch im Wafer implantiert. Die Implantationsrate ist jetzt hoch zu wählen, um einen ohmschen Kontakt zum piezoresistiven Widerstand herstellen zu können. Die Implantationsrate betragt hier zum Beispiel 2 x 10¹⁵ Ionen pro Quadratzentimeter. Es kann so ein p⁺⁺-dotierter Bereich im Wafer entstehen, soweit dieser nicht durch eine abschirmende Schicht bedeckt ist.

Die verfahrensgemäß vorgesehene Metallschicht kann im Unterschied zu einer Lackschicht praktisch nicht durch einen Beschuß mit Ionen geschädigt werden. Eine durch Ionen durchgehend geschädigte Lackschicht hätte nachteilhaft nicht mehr durch Belichtung nebst Entwicklung oder durch Lösungsmittel entfernt werden können. Schäden am Wafer wären unvermeidlich gewesen.

Die Oberfläche des Hebelarms ist im Vergleich zu den eingangs erwähnten konventionellen Wafern uneben. Wäre ein Fotolack ohne eine metallische Zwischenschicht auf dem Wafer aufgebracht worden, so wäre dieser infolge der Unebenheiten stellenweise nur sehr dünn gewesen. Der nachfolgende starke Ionenbeschuß hätte den Fotolack an seinen dünnen Stellen durchgehend beschädigen können, Eine Entfernung des Fotolackes wäre an den durchgehend geschädigten Stellen nicht mehr ohne Schädigung des Wafers möglich gewesen.

Das vorgenannte Problem wird durch das Vorsehen einer metallischen Zwischenschicht gelöst. Zwar kann der auf der metallischen Schicht aufgebrachte Fotolack ebenfalls aufgrund dünner Stellen so stark geschädigt werden, daß dieser nicht mehr z. B. mit Lösungsmitteln entfernt werden kann. Ein vollständig geschädigter Teil kann jedoch unproblematisch zusammen mit der Metallschicht weggeätzt werden.

Nachdem die Metall- und die Lackschicht entfernt wurden, erfolgt nun ein Ausheilprozeß bei ca. 900°C.

Z. B. mit Flußsäure wird im nächsten Schritt die Oxidschicht im Bereich der Fenster weggeatzt. Es entstehen so Aussparungen, die zur unterhalb der Oxidschicht befindlichen implantierten Schicht führen.

Anschließend werden in die Aussparungen bis zum implantierten Widerstand hineinführende elektrisch leitfähige Leiterbahnen hergestellt.

Zur Herstellung der elektrisch leitfähigen Leiterbahnen kann zunächst eine großflächige Metallschicht aufgetragen werden. Anschließend wird ein Fotolack aufgebracht. Im Fotolack wird ein Fenster so erzeugt, daß die metallische Schicht geeignet zum Beispiel durch Ionenstrahlätzen partiell entfernt werden kann. Die Metallschicht wird dann nicht nur im Bereich der Fenster entfernt, sondern erwünscht auch an der nicht durch Fotolack geschützten Spitze.

Vorteilhaft wird bei der vorgenannten Herstellung von Leiterbahnen ein Metall vorgesehen, welches naßchemisch weggeätzt werden kann. Das Metall wird dann statt durch Ionenstrahlätzen naßchemisch entfernt.

Naßchemisches Ätzen ist hier möglich, da lediglich eine dünne Metallschicht vorliegt und somit praktisch nur in die Tiefe geätzt wird. Naßchemisches Ätzen ermöglicht im Unterschied zum Ionenstrahlätzen ein selektives Ätzen. Es werden so im Unterschied zum Ionenstrahlätzen Materialien nicht in unerwünschter Weise geschädigt. Die Spitze kann problemlos vollständig vom Metallbelag befreit werden, ohne daß diese geschädigt wird. Es ist darüber hinaus billig und schnell.

Alternativ kann zunächst eine Lackschicht aufgetragen werden. Es werden Fenster in der Lackschicht entsprechend dem vorgesehenen Verlauf der Leiterbahnen erzeugt. Großflächig wird eine z. B. aus Nickel oder Titan und Aluminium bestehende Metallschicht aufgetragen. Der Lack wird zusammen mit der darauf befindlichen Metallschicht weggeschwämmt, d. h. der Fotolack wird mit Lösungsmitteln, wie z.B. Azeton, vollständig gelöst und so entfernt. Es verbleiben die gewünschten metallischen Leiterbahnen sowie ein metallischer Belag auf der Spitze.

Ein metallischer, ferromagnetischer Belag auf der Spitze eines Hebelarms für ein Rasterkraftmikroskop vermag vorteilhaft das Auflösungsvermögen zu steigern, wie z. B. der Druckschrift WO 96/37788 zu entnehmen ist.

Beim anspruchsgemäßen Verfahren bleibt die Spitze im Unterschied zum konventionellen C-MOS-Verfahren erhalten.

Das anspruchsgemäße Verfahren ist vergleichsweise einfach und somit preiswert. Es werden an technisch aufwendigen Geräten eine Vorrichtung zur Durchführung von insgesamt drei Lithografieschritten, ein Oxidationsofen zur Durchführung von zumindest einem Oxidationsschritt sowie eine Implantationsanlage für ein zweimaliges Implantieren von Ionen benötigt. Das Verfahren kann vollständig automatisiert werden.

Selbstverständlich muß das Verfahren nicht exakt in der vorgenannten Reihenfolge ausgeführt werden. Variationen und ergänzende Maßnahmen sind möglich.

Es ist darauf zu achten, daß die eingangs genannten zerstörerischen Prozesse für die Spitze und den ggf. von Anfang an als Hebelarm für Rasterkraftmikroskope ausgebildeten und somit zerbrechlichen Wafer in anspruchsgemäßer Weise vermieden werden.

Die Aufgabe der Erfindung wird ferner durch einen verfahrensgemäß hergestellten Hebelarm gelöst. Hebelarm und Spitze bestehen aus einem Teil. Sie sind einstükkig. Ein piezoresistiver Widerstand ist im Hebelarm unterhalb einer Oxidschicht integriert. Der piezoresistive Widerstand ist mit metallischen Leiterbahnen verbunden.

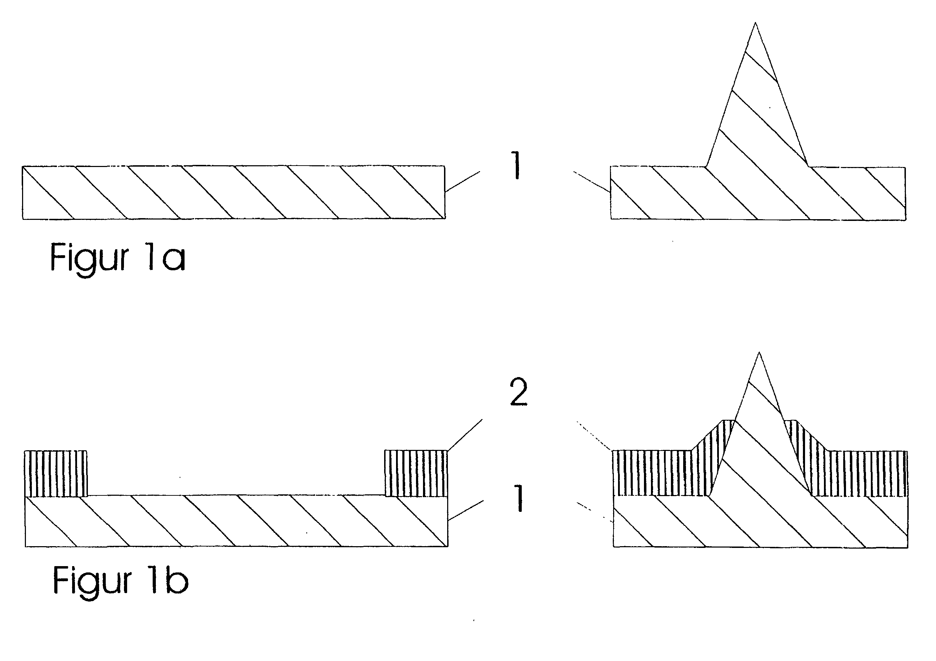

Das Verfahren wird im folgenden anhand der Figuren 1-4 weiter verdeutlicht.

Figur 1a zeigt im Schnitt ein einkristallines Si-Substrat 1 mit einer Spitze und einer (100)-Oberfläche.

Das Substrat weist die Form und Abmessungen eines Hebelarms für Rasterkraftmikroskope auf.

Ein Fotolack 2 wird gemäß Figur 1b auf die (100)-Oberfläche z. B. mittels Spin-On-Technik aufgeschleudert. Der Wafer dreht sich bei der Spin-On-Technik mit hoher Geschwindigkeit von 2000 bis 4000 Umdrehungen pro Minute. Der Fotolack wird währenddessen mit einer Pipette aufgetropft oder aufgegossen. Der Lack wird durch die Rotation nach außen geschleudert. Es entsteht so die gewünschte Lackschicht.

Der Bereich für den Widerstand wird belichtet und entwickelt. Es entsteht so ein Fenster in der Lackschicht 2. Die Spitze wird durch die Lackschicht nicht bedeckt, da der Lack an der Spitze abreißt.

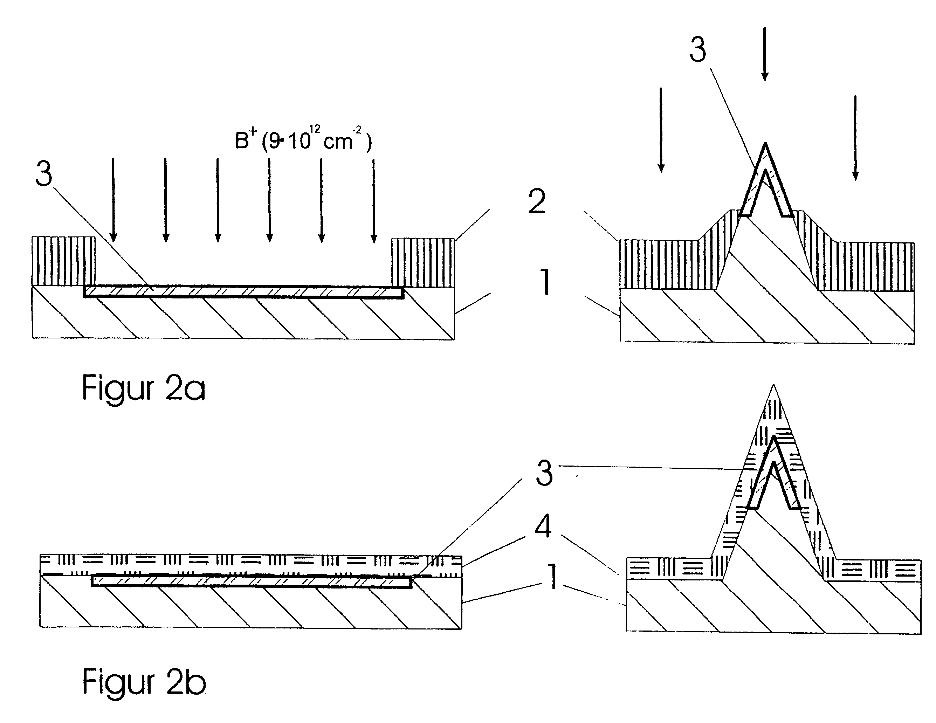

Im nächsten Schritt wird das Substrat gemäß Figur 2a mit B⁺-Ionen beschossen. Die Dosis beträgt 9•10¹²cm⁻². Im Bereich der nicht durch den Lack 2 geschützten Oberflächen enstehen p-dotierte Schichten 3, in denen B⁻-Ionen implantiert sind.

Der Lack 2 wird entfernt und dann gemäß Figur 2b eine SiO₂-Schicht 4 auf der Oberfläche des Wafers 1 erzeugt. Die Oxidschicht 4 dient zur Isolation von Leiterbahnen und zur Herstellung eines MOSFETs.

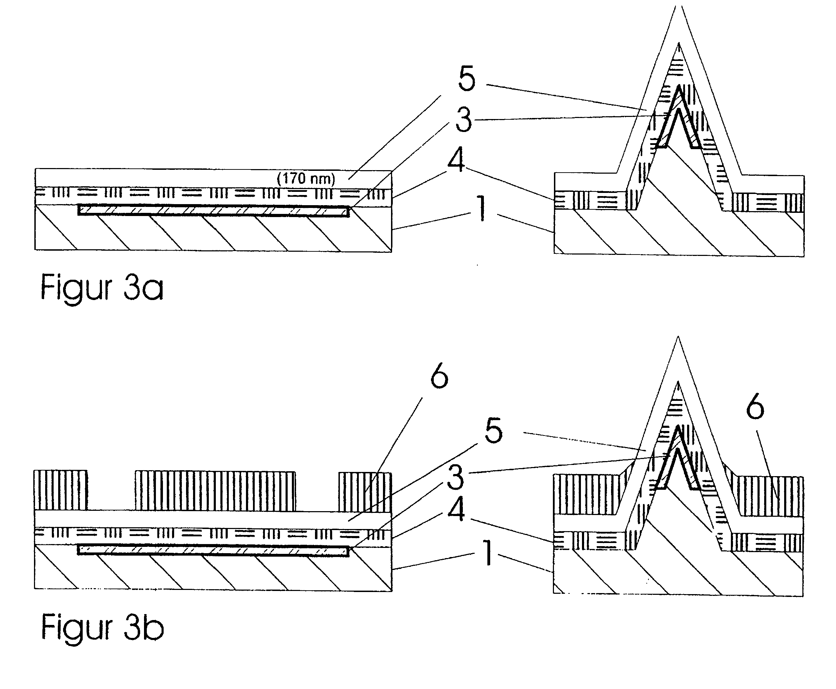

Auf die Oxidschicht 4 wird im nächsten Schritt aemäß Figur 3a eine 170 nm dicke Chromschicht 5 z. B. durch Elektronenstrahlverdampfung aufgebracht. Die Chromschicht 5 deckt auch die Spitze ab.

Eine neue Fotolackschicht 6 wird auf die Chromschicht 5 aufgebracht. Es werden in der neuen Fotolackschicht 6 Fenster in der aus Figur 3b ersichtlichen Weise dort durch Belichtung und Entwicklung erzeugt, wo die elektrischen Kontakte zur p-dotierten Schicht 4 hergestellt werden sollen.

Die Spitze kann wiederum nicht mit einer Fotolackschicht bedeckt werden.

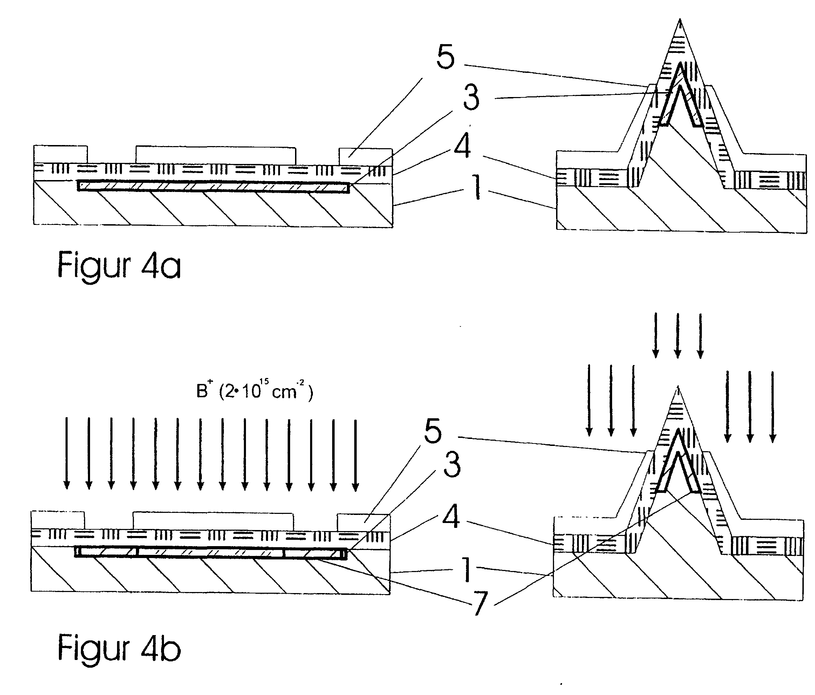

Die Chromschicht 5 wird an den nicht durch Fotolack bedeckten Stellen durch naßchemisches Ätzen in z. B. Chrom-Ätze entfernt. Anschließend wird der Fotolack 6 entfernt. Es liegt dann der in Figur 4a gezeigte Zustand vor.

Gemäß Figur 4b wird der Wafer erneut mit B⁺-Ionen beschossen. Die Dosis beträgt diesmal 2•10¹⁵ cm⁻². Es entstehen daraufhin p⁺⁺-dotierte Schichten 7 unterhalb der Oxidschicht 4.

Durch eine Temperaturbehandlung bei nicht zerstörerisch wirkenden Temperaturen werden Gitterfehler geheilt. Metallische Leiterbahnen, die die p-dotierte Schicht 3 an den p⁺⁺-dotierten Kontaktstellen 7 kontaktieren, können nun in beschriebener Weise erzeugt werden.

Insbesondere wird der nun vorliegende implantierte piezoresistive Widerstand 3 zu einem MOSFET ausgebaut.

## Patentansprüche

1. Verfahren zur Herstellung eines Hebelarms mit einer Spitze für ein Rasterkraftmikroskop, bei dem in einem eine Spitze aufweisenden Wafer ein piezoresistiver Widerstand mittels C-MOS implantiert wird,
**dadurch gekennzeichnet, daß**
- eine metallische Schicht als Schutzschicht für die Spitze auf den Wafer aufgebracht wird,
- auf diese metallische Schicht eine Photolackschicht aufgebracht und strukturiert wird,
- die metallische Schicht entsprechend der Photolackschicht weggeätzt wird,
- der Wafer mit Ionen beschossen wird, wobei die metallische Schicht auf der Spitze nicht abreißt, die metallische Schicht naßchemisch entfernt wird.

2. Verfahren nach vorhergehenden Anspruch, bei dem ein aus einkristallinem Silizium bestehender Wafer eingesetzt wird und jede Temperaturbehandlung unterhalb von 1000 °C, insbesondere unterhalb von 950 °C durchgeführt wird.

## Claims

1. Process for producing a lever arm with a tip for an electron scan power microscope, in which a piezo-resistive resistance is implanted in a wafer, having a tip, by means of a CMOS,
**characterized in that**
- a metallic layer is applied to the wafer as a protective layer for the tip,
- a photo-lacquer layer is applied to and structured on this metallic layer,
- the metallic layer, corresponding to the photo-lacquer layer, is etched away,
- the wafer is bombarded with electrons, whereby the metallic layer does not tear off on the tip,
- the metallic layer is removed in a wet chemical process.

2. Process in accordance with the preceding claim, in which a wafer made of single-crystal silicon is used, and each temperature-treatment is carried out below 1000°C, particularly below 950°C.

## Revendications

1. Procédé de production d'un bras de levier ayant une pointe pour un microscope à balayage, dans lequel on implante, dans une tranche comprenant une pointe, une résistance piézorésistive au moyen d'un C-MOS,
**caractérisé en ce que**
- on dépose sur la tranche une couche métallique en tant que couche de protection de la pointe,
- on dépose et on structure une couche de vernis photosensible sur cette couche métallique,
- on élimine par attaque chimique la couche métallique conformément à la couche de vernis photosensible
- on bombarde la tranche d'ions, la couche métallique sur la pointe n'étant pas détachée,
- on élimine en voie chimique humide la couche métallique.

2. Procédé suivant la revendication précédente, dans lequel on utilise une tranche en silicium monocristallin et on effectue chaque traitement thermique à une température inférieure à 1000°C, notamment inférieure à 950°C.
